# EUROPEAN PATENT APPLICATION

(11) **EP 1 050 979 A1**
(43) Date of publication of application: **08.11.2000**
(21) Application number: 99303538.5
(22) Date of filing: 06.05.1999
(51) Int. Cl.: H04B 7/185

(54) **Method for intelligent cell selection using location data in satellite cellular systems**

(71) Applicant: ICO Services Ltd., London W6 9BN (GB)
(72) Inventor: Hungerford, Keith Norman Guy, Balmain NSW 2041 (AU); Mullins, Dennis Roy, London SE11 5UL (GB)
(74) Representative: Read, Matthew Charles

(57) **Abstract**

In a cellular satellite communication system in which a user terminal (4a) selects a cell (C0) to establish a communication path on the basis of signal strength measurements on a broadcast channel frequency (BCCH), a method of verifying that the selected cell (C0) will allow a valid communication path to be established, even where the selected cell (C0) is an outsize cell as a result of inaccuracies in the BCCH power setting process. The method includes determining the position of the user terminal (4a) in relation to a nominal cell (C0N) which defines the intended geographical extent of the selected cell (C0). If the user terminal (4a) is located within the boundaries of the nominal cell (C0N), the ability to establish a valid communication path, without violating the operating constraints of the satellite system, is guaranteed.

## Description

This invention relates to cell selection by a mobile user terminal in a cellular telecommunications system, particularly but not exclusively to a method of verifying a user terminal's selection of a cell in a satellite mobile telephone system.

Mobile telecommunication systems have been proposed that use satellite communication links between mobile user terminals and conventional terrestrial networks. One network known as the IRIDIUM™ satellite cellular system and described in, for example, EP-A-0 365 885 and US Patent No. 5 394 561 (Motorola), makes use of a constellation of so-called low earth orbit (LEO) satellites, that have an orbital height of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital height in the range of 10-20,000 km. Reference is directed to the ICO™ satellite cellular system described, for example, in GB-A-2 295 296. With this system, the satellite communication link does not permit communication between adjacent satellites. Instead, a signal from a mobile user terminal such as a mobile handset is directed firstly to the satellite and then to a ground station or satellite access node (SAN), which is connected to a conventional land-based telephone network. This has the advantage that many components of the system are compatible with known digital terrestrial cellular technology such as GSM. Also, simpler satellite communication techniques can be used than with a LEO network. Reference is directed to "New Satellites for Personal Communications", Scientific American, April 1998, pp. 60-67, for an overview of LEO/MEO satellite networks.

A telephone call made over the satellite link is directed over a dedicated traffic channel. A number of common channels are also provided for all user terminals within a particular cell. For example, a broadcast control channel BCCH is broadcast from the satellite to all user terminals within a particular cell, and provides information that identifies the cell to each user terminal. The BCCH is received by the user terminal in the idle mode i.e. when no call is being made. Each cell has its own BCCH, so the relative signal strengths of the BCCHs at the user terminal can be used to determine which cell can best be used for communication with the user terminal. Other system information may be transmitted in the BCCH to the user terminals located within a particular cell. A random access channel RACH is also provided. This is an "uplink" unidirectional channel from the user terminal to the satellite, and allows user terminals to transmit their access requests via a satellite to an earth station, choosing their transmission time in a random manner.

A cellular mobile communication system which allows random access by mobile user terminals needs to include a specification of how a terminal should select a particular cell for access. The choice of cell is important since time delay, doppler shift and interference constraints may mean that support of a dedicated radio resource is not possible if the terminal has not selected the most appropriate cell.

Conventional cell selection techniques use power measurements to determine the optimum cell for access. Typically, this involves selecting the best cell by using a ranking of received signal strengths on a beacon frequency of each cell, such as the BCCH frequency, possibly offset using broadcast information related to the power transmitted from the base station. In GSM terrestrial cellular systems, a 35 kilometre radius around a base station can typically be accommodated. Terminals which are outside this area cannot be supported.

For terrestrial systems, the signal attenuates as the user moves away from the base station, following an inverse third to fourth power law, so that power levels can be relatively accurately calibrated.

In satellite systems such as the ICO™ system, spot beams defining the cells are nominally of a predetermined size. They overlap very slightly, in the ideal model forming a neat and regular pattern. However, the actual size of a spot beam on the surface of the Earth can vary. Its operational size is determined by its nominal 3dB points, where the signal falls away to a cell boundary level of about 70 per cent. of its mean, central value.

The operational size of a cell is based on the premise that the signal strength of the BCCH can be accurately set in each cell. However, variations in the power sensitivity of the equipment at the earth station, including modems and transmitting equipment, can cause an error of up to +/- 1.5dB. Further calibration uncertainty in the uplink power control to the satellite can cause a further error of up to +/- 1dB. The worst case error is therefore about 5dB, where adjacent cells are produced by beams from different satellites. Although this may be relatively rare, an uncertainty of 1 - 2dB is quite common and will significantly distort spot beam shapes.

Differing power levels in adjacent cells can result in some cells being larger and others smaller than their nominal size. This can have serious implications for the operation of a satellite system. For example, to maximise use of the available spectrum while minimising interference between user terminals re-using frequencies within a given area, a 4-zone mapping system is used. An outsize cell could violate the mapping isolation. Further, the ICO™ system is based on a TDMA timing scheme, in which proper timing and frequency synchronisation is based on compensating for operational delays and doppler shifts within each cell. The compensation scheme can rarely be extended beyond the nominal geographical boundaries of a cell. In the case of an outsize cell, signals to a user terminal which lies beyond the cell's nominal boundaries may be subject to more doppler shift than can be accommodated, and the determination of the required delay compensation is likely to be incorrect leading to collisions between TDMA signal bursts.

In accordance with the present invention there is provided a method of verifying a cell selection made by a user terminal in a cellular satellite telecommunications system, comprising determining the position of the user terminal in relation to a nominal cell corresponding to a selected cell, wherein the nominal cell defines the range of positions of the user terminal for which its cell selection is valid.

The nominal cell may define the intended geographical extent of the selected cell and the method can include instructing the user terminal to make a new cell selection when the user terminal lies outside the nominal cell. Therefore, the effect of any power variations on cell size can be minimised.

The method can include the step of providing the user terminal with information as to its position and with information defining the nominal cell, such as a set of coordinates defining the geographical location of the vertices of the nominal cell. The determination of the position of the user terminal in relation to the nominal cell can then be carried out at the user terminal. Alternatively, the information defining the user terminal position and defining the nominal cell can be held at the ground station which carries out the determination of relative position and instructs the user terminal accordingly.

In accordance with the present invention, there is also provided a method of operating a user terminal in a cellular satellite telecommunications system, wherein the user terminal selects a cell according to the reception quality of the cell at the user terminal, comprising determining the position of the user terminal in relation to the boundaries of a nominal cell corresponding to the selected cell, and controlling the operation of the user terminal in dependence thereon, wherein the nominal cell defines a range of positions of the user terminal for which its cell selection is valid.

The user terminal position can be notified to the user terminal during registration of the user terminal with a ground station.

The method may include controlling the operation of the user terminal to select a cell with a reception quality sufficient to support communications when the user terminal lies within the nominal boundaries of the cell.

There is further provided, in accordance with the present invention, a user terminal for use in a cellular satellite telecommunications system, comprising means for selecting a cell, receiving circuitry configured to receive information defining a nominal cell corresponding to a selected cell, processing circuitry configured to determine the position of the user terminal in relation to the nominal cell, and means for controlling the cell selecting means in dependence on said determination.

Yet further, in accordance with the present invention, there is provided satellite cellular telecommunications apparatus for establishing a communication path with a user terminal, comprising means for determining the position of the user terminal relative to a nominal cell corresponding to the selected cell, wherein the nominal cell defines the range of positions of the user terminal for which its cell selection is valid. The apparatus can include means for instructing the user terminal to select or reject a given cell in dependence on said determination.

Embodiments of the present invention will now be described, by way of example, with reference to the accompanying drawings, in which:
Figure 1 is a schematic diagram of the physical components of a satellite mobile telephone system;
Figure 2 shows the satellite beam pattern in the ICO™ satellite mobile telephone system;
Figure 3 is a more detailed diagram of the different types of spot beam in the beam pattern of Figure 2;
Figure 4 shows a mobile user terminal partially cut away;
Figure 5 shows part of a beam pattern for the ICO™ network together with the nominal cells showing the intended extent of the broadcast cells, with the user terminal in a first location;
Figure 6 shows part of a beam pattern for the ICO™ network together with the nominal cells showing the intended extent of the broadcast cells, with the user terminal in a second location;
Figure 7 shows the nominal coverage areas of nominal cells for various different types of spot beam;
Figure 8 is a table showing BCCH idle mode signal strength for the user terminal location shown in Figure 5;
Figure 9 is a table showing BCCH idle mode signal strength for the user terminal location shown in Figure 6;
Figure 10 is a flow diagram showing the cell selection process at the user terminal;
Figure 11 is a flow diagram showing the cell selection process at the ground station; and
Figure 12 illustrates the concept of delay/Doppler position location of a user terminal.

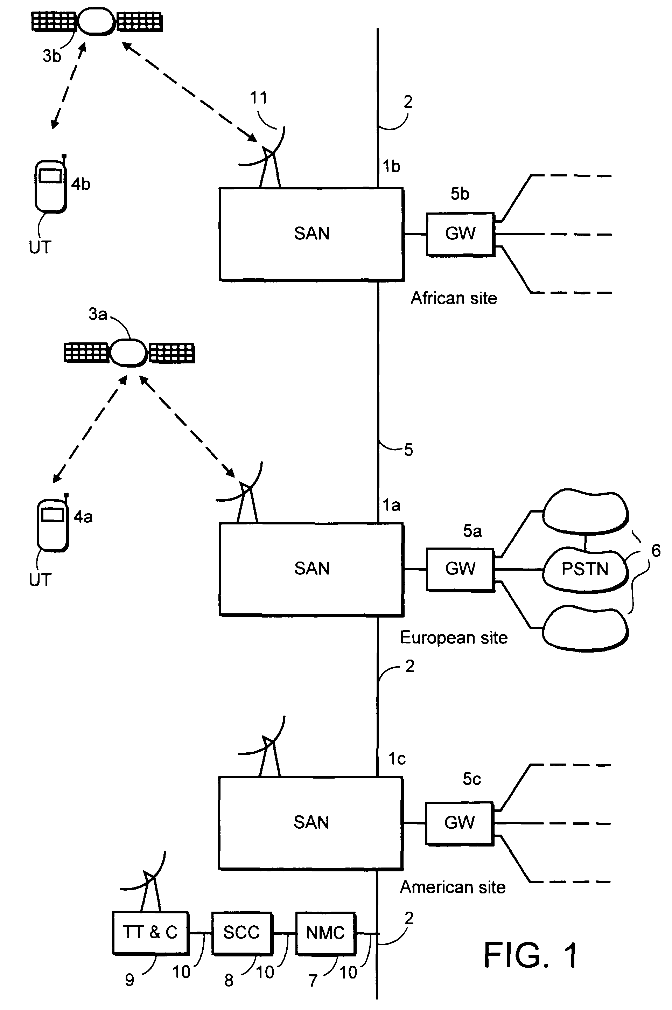

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other networks 6, a network management centre (NMC) 7, a satellite control centre (SCC) 8 and a tracking, telemetry and control station (TT&C) 9. The NMC 7, the SCC 8 and the TT&C 9 are interconnected by a lower capacity digital network 10 which is also connected to the backbone network 2. The other networks 6 comprise the public switched telephone network (PSTN), terrestrial cellular telephone networks and the like.

The SCC 8 and the TT&C 9 control the operation of the satellites 3a, 3b, for instance setting transmit power levels and transponder input tuning, as directed by the NMC 7. Telemetry signals from the satellites 3a, 3b are received by the TT&C 9 and processed by the SCC 8 to ensure that the satellites 3a, 3b are functioning correctly.

During a telephone call, a UT 4a, 4b communicates with SAN 1a, 1b via the satellites 3a, 3b using a TDMA scheme over a link comprising a downlink channel and an uplink channel. The channels comprise TDMA time slots on frequencies allocated on initiation of the call or re-allocated during a call.

The satellite network is designed to provide worldwide coverage, so the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by a UT all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital height of 10,355 km, although the invention is not restricted to a particular orbital height. In this embodiment, satellites 3a, 3b are shown in a common orbit and are tracked by the antenna arrangement 11 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1a is shown communicating with UT 4a via satellite 3a. For further details of the satellite network, reference is directed to GB-A-2 295 296.

The satellites 3a, 3b are in non-geostationary orbits and comprise generally conventional satellites, such as the known Hughes HS601 model. They may further include features as disclosed in GB-A-2 288 913. Each satellite 3a, 3b is arranged to generate an array of beams, one beam for each cell, covering a footprint beneath the satellite, each beam including a number of different frequency channels and time slots.

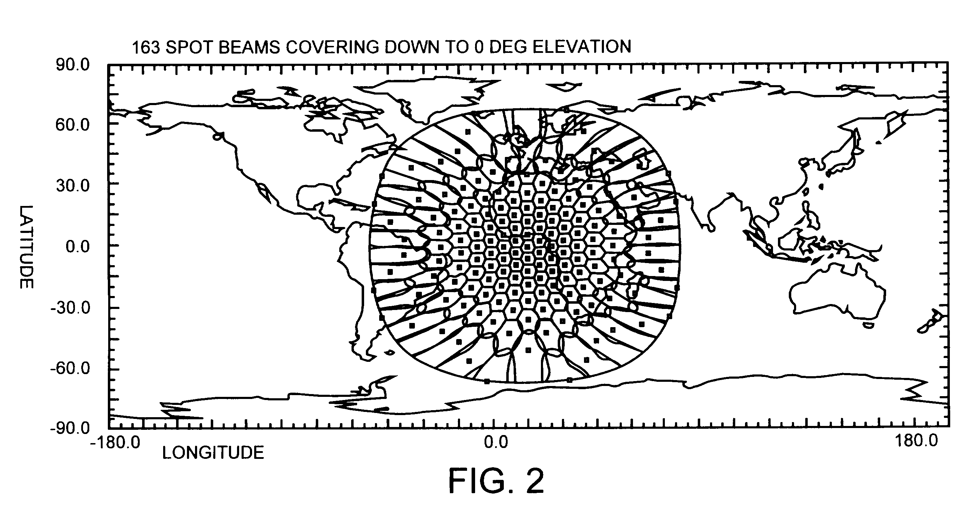

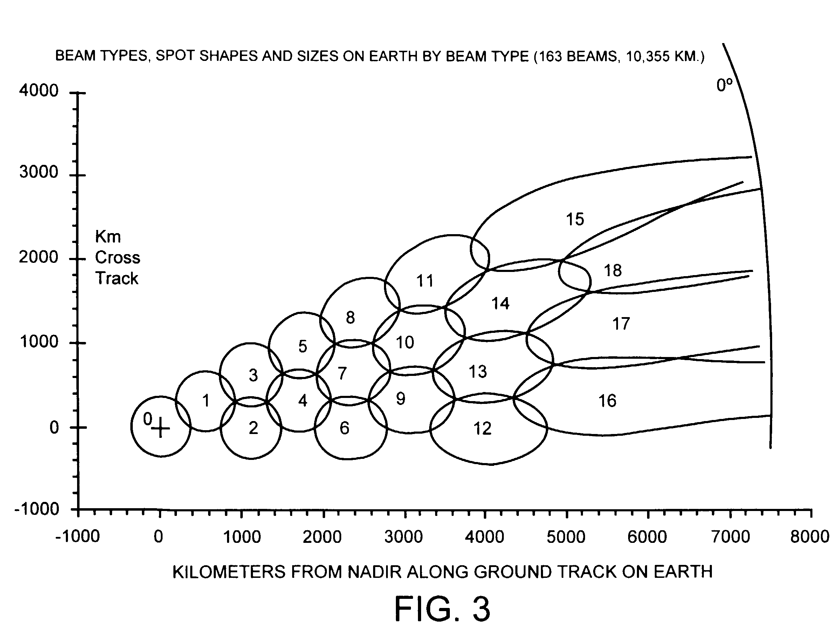

Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

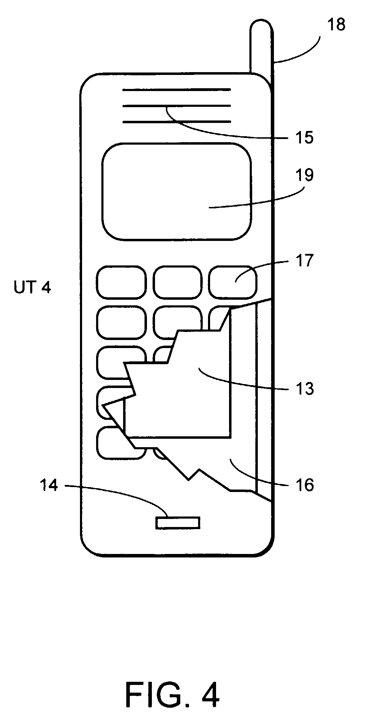

A UT 4a, 4b is shown in more detail in Figure 4 and is generally similar to the units presently available for GSM networks. It comprises a codec (not shown), a controller 13, a microphone 14, a loudspeaker 15, a battery 16, a keypad 17, a radio frequency interface (not shown), an antenna 18, a display 19 and a subscriber identification module (SIM) smart card (not shown).

The controller 13 comprises a microprocessor and RAM and ROM memory. The microprocessor operates in accordance with a control program stored in the ROM memory. The controller can exchange control and telemetry data with a SAN 1a, b, c using the radio frequency interface.

The SIM includes a processor and a non-volatile memory which stores data identifying the subscriber and data for use in encrypted communication, as well as information relating to system operation, for example, a set of system reference frequencies.

The signal transmission scheme includes channels for providing communication between the UTs individually and one of the SANs via a satellite, together with a number of common channels for all UTs within the cell defined by a particular satellite spot beam.

For speech transmission, data is sent on an individual traffic channel TCH. Each TCH is provided with an associated slow rate control channel or SACCH. It will be understood that the TCH/SACCH is transmitted when the UT is in dedicated mode i.e. during a call.

In addition to the channels TCH/SACCH to the individual UTs, a number of common channels are provided for all UTs within each cell corresponding to one of the satellite's spot beams, which will now be described in more detail.

A broadcast control channel BCCH is broadcast from the satellite to all UTs within a particular cell. The BCCH provides information which identifies the cell to the UT, which is received by the UT in idle mode i.e. when no call is being made. As each cell has its own BCCH, the relative signal strengths of the BCCHs at the UT can be used to determine which cell is to be used for TCH/SACCH communication with the UT. The BCCH also provides the UT with information defining the nominal boundaries of the cell, as described in detail below. Other system information may be transmitted to the UTs of a particular cell in the BCCH in a similar manner to GSM.

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH).

In addition to these downlink common channels, there is an uplink common channel which allows UTs within a cell to transmit access requests to the network, when it is desired to make a call from the UT or, in response to a paging message received on a PCH channel, when a third party wishes to make a call to the UT. These requests thus occur essentially randomly in time and the channel is accordingly called the random access channel RACH.

The common channels are transmitted on beacon frequencies for the cell concerned such that BCCH is transmitted on frequency f1, PCH/AGCH on f2 and RACH on f3. Adjacent cells have different beacon frequencies to distinguish them from one another.

In the following, the procedures leading to the setting up of a telephone call between a telephone set connected to the PSTN 6 and UT 4a through SAN 1a and satellite 3a, will be considered in more detail.

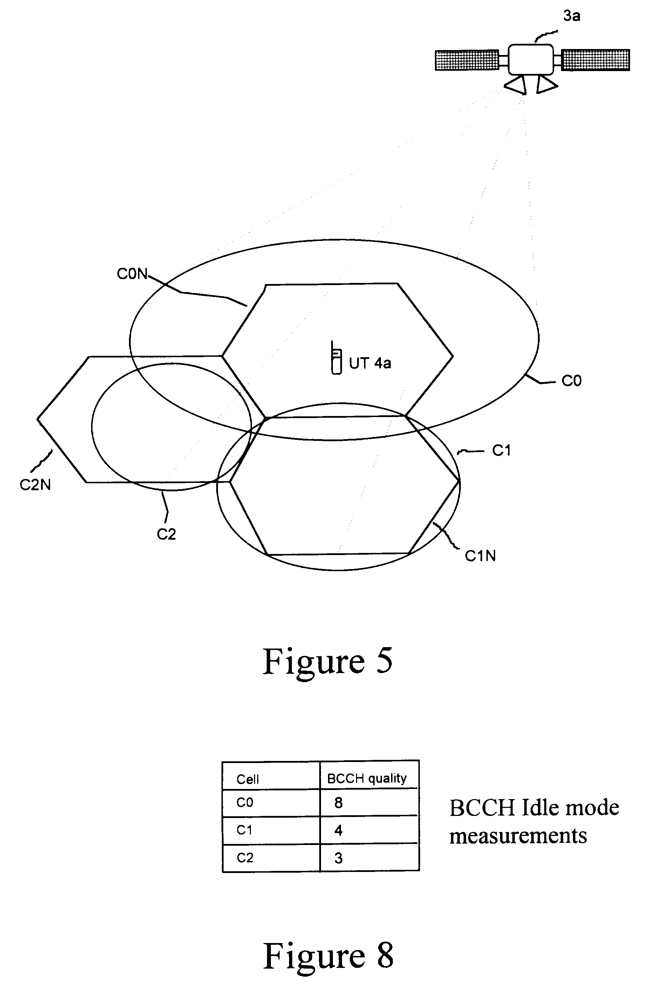

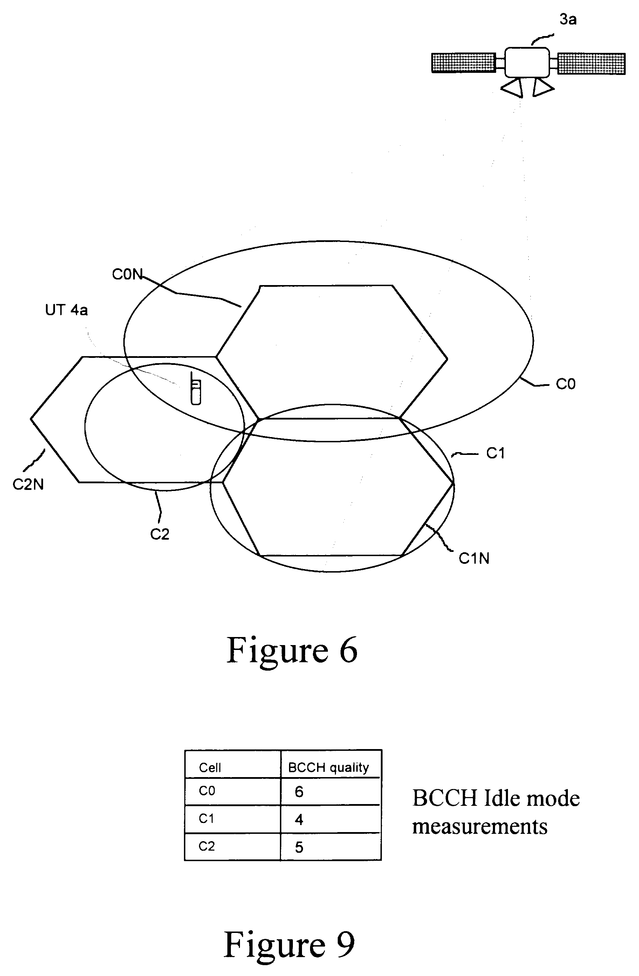

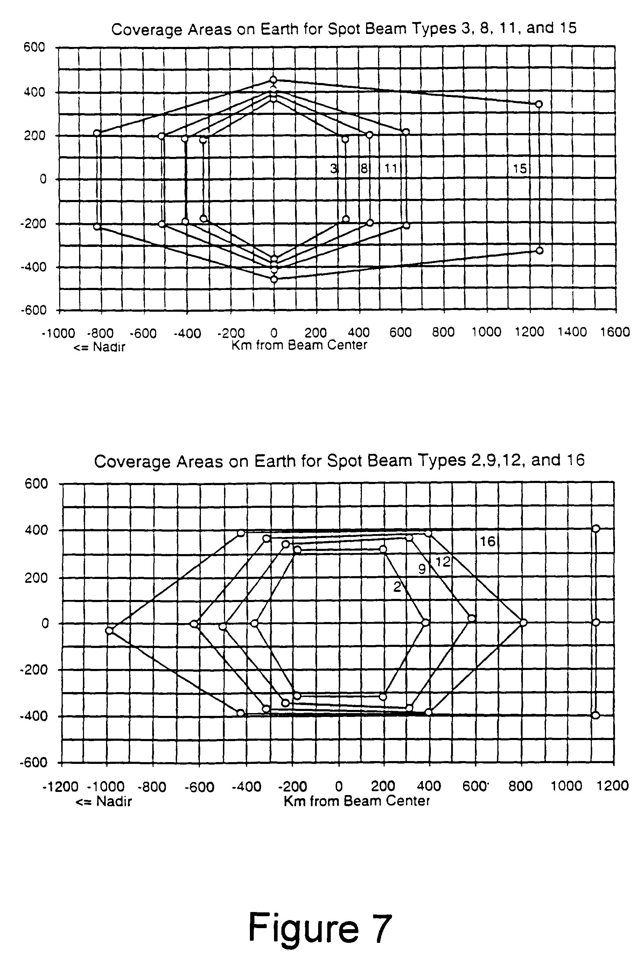

Referring to Figures 5 and 6, the different sized cells C0 - C2 are an example of the extent on the Earth's surface of cells produced by the footprints of three of the 163 spot beams from the satellite 3a. For clarity, other adjacent cells are not shown, nor are overlapping cells from other satellites. Cell C1 is assumed to be of the nominally correct size, while cell C2 is undersize and cell C0 oversize, as a result of inaccuracies and errors in the BCCH power setting process as described above. Also shown are nominal cells C0N - C2N which are irregular hexagon-shaped areas representing the intended geographical extent of each of cells C0 - C2 respectively. Each nominal cell C0N - C2N is defined by six vertices, and the nominal coverage area of each cell differs depending on the differing types of spot beam, as shown in Figure 7. The geographical area covered by a nominal cell is the area for which a valid TCH/SACCH may be allocated to the UT 4a without violating any of the operational parameters of the system, such as timing and frequency constraints. The geographical position of each of nominal cells C0N - C2N is stored at the SAN 1a.

The user terminal UT 4a is shown at a different position in each of Figures 5 and 6. In the location shown in Figure 5, UT 4a is located within both cell C0 and its corresponding nominal cell C0N. In the location shown in Figure 6, UT 4a is located within cells C0 and C2, but only within the area covered by the nominal cell C2N.

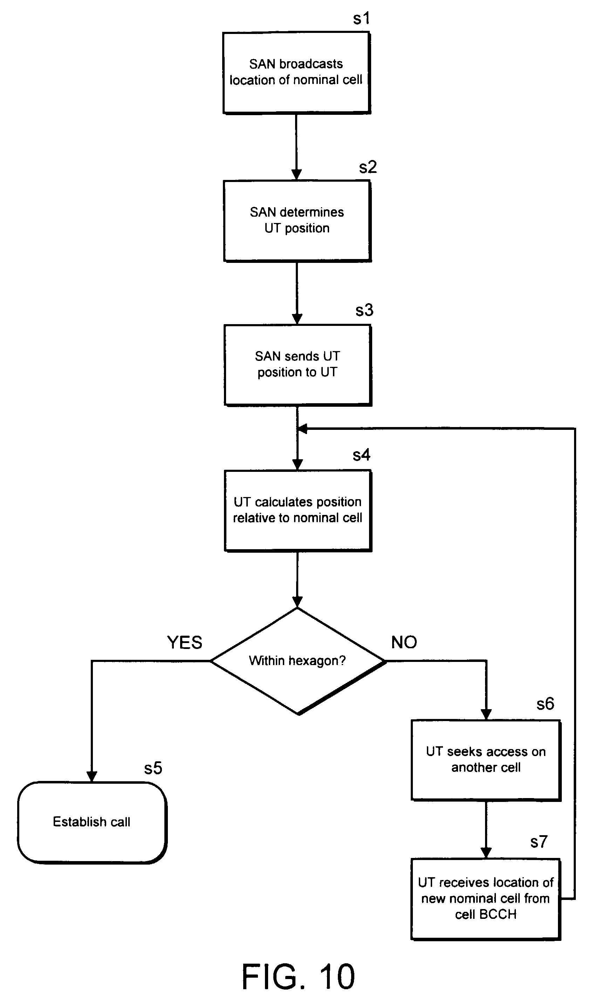

Considering the UT location shown in Figure 5, prior to commencement of the call, the UT 4a monitors, in the idle mode, the BCCHs of cells C0 - C2, and builds up a table of the received signal reception quality, which may be measured in terms of a bit error rate as in GSM, signal strength or any other suitable parameter. An example table is shown in Figure 8, and is stored in, for example, the UT controller 13. The BCCH quality is, for example, measured on a scale of 1 - 10, with a quality of 5 - 10 indicating that the cell is apparently available for use by the UT 4a, ie. the UT lies within the operational boundaries of the cell. The UT 4a is provided with the details of the beacon frequencies of the BCCHs of cells C1 and C2 in a BCCH message for cell C0 so that it can locate the BCCHs for the adjacent cells. Each BCCH contains data which identifies the cell concerned, and also the satellite that is producing the corresponding spot beam.

When a call is initiated by the UT 4a, it sends a RACH request to the SAN 1a via the best quality cell, which is C0, as indicated in Figure 8. The SAN 1a allocates a particular TCH/SACCH for the call. The UT 4a is informed of the allocated TCH/SACCH by a message on AGCH. The UT 4a monitors the AGCH for this information after the issuance of a RACH message so that it can tune to the appropriate TCH/SACCH for the call.

Considering now the UT location shown in Figure 6, the UT 4a similarly monitors the BCCH frequencies of cells C0 - C2. In this case, because cell C0 is oversize, and cell C2 is undersize, the BCCH signal strength at this position is still greater for C0 than it is for C2 and erroneously indicates to the UT 4a that cell C0 is the appropriate cell for it to select, rather than C2, as shown in the BCCH measurement table of Figure 9.

If the call is initiated from the telephone set to the UT 4a, a signal is sent from SAN 1a on the paging channel PCH to trigger the UT 4a to send a RACH, and the call then proceeds in the same way as for a UT initiated call, as described above. The UT will only receive the page if it is receiving the paging channel of the cell whose nominal boundary encloses the UT's position, since the network sends pages to UTs in accordance with the known position of the UT and the known nominal cell boundaries.

Referring to Figure 10, to enable the UT 4a to determine whether the cell C0 or C2, etc. is the appropriate cell for access, the SAN 1a broadcasts in the cell BCCH via the satellite 3a the geographical location of the six vertices of the nominal hexagon CON (step s1). This information is stored by the UT 4a. The SAN 1a also determines the position of the UT 4a on the surface of the Earth (step s2), as described in detail below, and returns this information to the UT (step s3). The UT 4a then calculates its position relative to the hexagon (step s4). If it determines that it is inside the hexagon, for example, in the location illustrated in Figure 5, then the UT 4a can continue with establishing the call via cell C0 (step s5). If it determines that it is outside the hexagon, for example, in the location illustrated in Figure 6, then the UT 4a knows that it cannot use cell C0 and needs to seek access on another spot beam (step s6). For example, referring to Figure 9, the UT 4a selects the next best cell from its table, cell C2, and uses this to make a further access request. The validity of this request can again be checked by using the method described above, including sending the geographical position of the nominal cell C2N to the UT 4a (step s7). In this case, the UT 4a lies within both C2 and C2N, so that a valid TCH/SACCH can be allocated to it via cell C2.

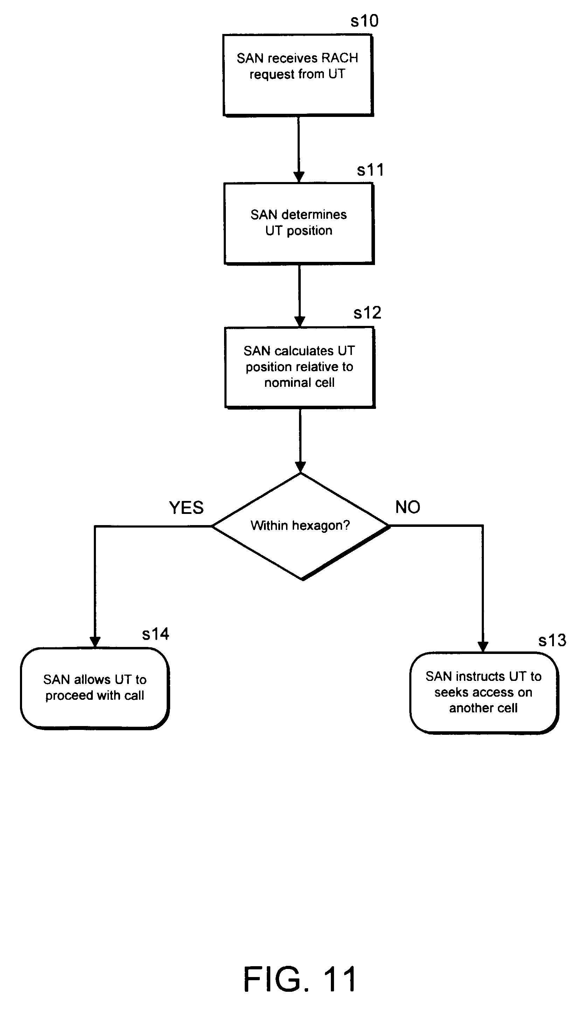

Referring to Figure 11, as an alternative to broadcasting the nominal cell vertices of the nominal cells to the UT 4a and performing the relative position calculations at the UT, the SAN 1a may determine the position of the UT 4a (step s11) on receiving a RACH request from the UT (step s10), using conventional delay and doppler shift measurements and compare the UT position with the SAN's knowledge of the position of the nominal cell (step s12). If the UT 4a is outside the boundaries of the nominal cell, the SAN 1a can assign a channel with a wider range of acceptable doppler shift than would be used for a TCH channel, and as early as possible in the call establishment procedure may command a handover to a different satellite beam (step s13). The SAN 1a can, for example, either direct the UT 4a to another cell, or allow the UT to select any other cell itself, as described in relation to the first embodiment above. If the UT is within the boundaries of the nominal cell, the call is allowed to proceed as normal (step s14).

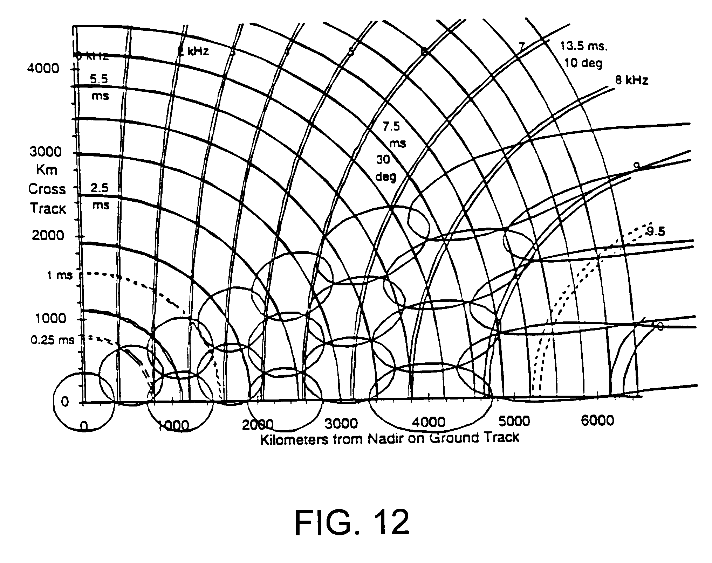

The way in which the UT position can be determined for use in the above techniques is illustrated with reference to Figure 12, which shows the concept of delay/Doppler position location, based on single satellite signal delay and doppler measurements made on, for example, the RACH transmitted by the UT 4a to the SAN 1a. Constant Doppler contours on Earth are shown at 1kHz intervals and constant path delay contours at 1ms intervals superimposed onto a beam pattern. The intersection of two contours determines UT position. All the contours are double lines, separated by representative errors of +/-10µs delay and +/-30Hz Doppler error. There is a high probability that the position of the UT lies inside the parallelogram at the #-shaped double-contour intersections. Although delay/Doppler data alone gives ambiguous UT positions within all four quadrants, only one of which is shown in Figure 12, the true position can be resolved by knowing which beam the UT is in or is apparently in. Alternatively, UT position can be determined on the basis of received signal delays via two or more satellites or on the basis of the Doppler shifts in signals received via a plurality of satellites. The UT could also be combined with a receiver for a navigation system such as GPS. In this case, the UT 4a can calculate its own position and transmit this to the SAN 1a, if necessary. Reference is further directed to our European publication number EP-A-0 856 957, for a detailed discussion of techniques for determining UT position.

## Claims

1. A method of verifying a cell selection made by a user terminal in a cellular satellite telecommunications system, comprising determining the position of the user terminal in relation to a nominal cell corresponding to a selected cell, wherein the nominal cell defines the range of positions of the user terminal for which its cell selection is valid.

2. A method according to claim 1, wherein the nominal cell defines the intended geographical extent of the selected cell.

3. A method according to claim 1 or 2, comprising instructing the user terminal to make a new cell selection when the user terminal lies outside the nominal cell.

4. A method according to claim 3, comprising allocating a channel with a wider range of doppler shift than is acceptable for a channel carrying communications traffic by which to instruct the user terminal to make a new cell selection.

5. A method according to claim 3 or 4, comprising instructing the user terminal to initiate a handover to a different satellite beam.

6. A method according to any preceding claim, wherein the user terminal selects a cell according to the cell reception quality.

7. A method according to claim 6, wherein the cell reception quality is measured by received signal strength on a broadcast channel associated with the cell.

8. A method according to any preceding claim, wherein the user terminal selects a cell on initial registration.

9. A method according to any preceding claim, comprising providing the user terminal with information defining the nominal cell.

10. A method according to claim 9, wherein the information comprises a set of co-ordinates defining the geographical location of the vertices of the nominal cell.

11. A method according to claim 9 or 10, comprising determining whether the user terminal lies within the nominal cell.

12. A method according to claim 11, comprising controlling the user terminal in dependence on said determination.

13. A method of operating a user terminal in a cellular satellite telecommunications system, wherein the user terminal selects a cell according to the reception quality of the cell at the user terminal, comprising determining the position of the user terminal in relation to the boundaries of a nominal cell corresponding to the selected cell, and controlling the operation of the user terminal in dependence thereon, wherein the nominal cell defines a range of positions of the user terminal for which its cell selection is valid.

14. A method according to claim 13, comprising receiving information defining the position of the nominal cell.

15. A method according to claim 13 or 14, wherein the user terminal position is notified to the user terminal during registration of the user terminal with a ground station.

16. A method according to any one of claims 13 to 15, comprising controlling the operation of the user terminal to select a cell with a reception quality sufficient to support communications when the user terminal lies within the nominal boundaries of the cell.

17. A user terminal for use in a cellular satellite telecommunications system, comprising:
means for selecting a cell;
receiving circuitry configured to receive information defining a nominal cell corresponding to a selected cell;
processing circuitry configured to determine the position of the user terminal in relation to the nominal cell; and
means for controlling the cell selecting means in dependence on said determination.

18. A user terminal according to claim 17, wherein the receiving circuitry is further configured to receive information defining the position of the user terminal.

19. A user terminal according to claim 18, further comprising position determining means.

20. Satellite cellular telecommunications apparatus for establishing a communication path with a user terminal, comprising means for determining the position of the user terminal relative to a nominal cell corresponding to the selected cell, wherein the nominal cell defines the range of positions of the user terminal for which its cell selection is valid.

21. Apparatus according to claim 20, including means for instructing the user terminal to select or reject a given cell in dependence on said determination.
